# EUROPÄISCHE PATENTSCHRIFT

(11) **EP 0 670 607 B1**
(45) Veröffentlichungstag und Bekanntmachung des Hinweises auf die Patenterteilung: **11.06.1997**
(21) Anmeldenummer: 95101757.3
(22) Anmeldetag: 09.02.1995
(51) Int. Cl.: H01M 10/50, H01M 2/10

(54) **Batteriekasten**
Battery case
Caisse de batterie

(30) Priorität: 04.03.1994 DE 4407156
(43) Veröffentlichungstag der Anmeldung: 06.09.1995
(73) Patentinhaber: Deutsche Automobilgesellschaft mbH, 38114 Braunschweig (DE)
(72) Erfinder: Klink, Rainer, 71394 Kernen (DE); German, Johann, 71384 Weinstadt (DE); Warthmann, Wolfgang, Dr., 71584 Weinstadt (DE)

(56) Entgegenhaltungen:
- EP-A- 0 533 317
- DE-A- 4 029 018
- DE-C- 4 116 253

## Beschreibung

Die Erfindung betrifft einen Batteriekasten gemäß dem Oberbegriff des Anspruchs 1, wie er aus der gattungsbildend zugrundegelegten DE 41 16 253 C1 als bekannt hervorgeht.

Die DE 41 16 253 C1 betrifft einen Batteriekasten, der mehrere miteinander verschaltete Zellen aufweist. Die einzelnen Zellen sind zu Zellengruppen zusammengefaßt und bodenseitig auf Simsen aufrecht stehend abgestellt. Zur Temperierung der einzelnen Zellen ist zwischen ihnen ein durch einen Abstand der Seiten der Zellen zueinander gebildeter Durchströmkanal angeordnet. Die Durchströmkanäle weisen eine fluidische Verbindung mit einem im Bodenbereich des Batteriekastens angeordneten Verteilerkanal und einem im Bereich des Deckels des Batteriekastens angeordneten Sammelkanal auf, wobei ein jeder der Verteilerkanäle über in der Wandung des Batteriekastens angeordneten Durchbrüche mit der Außenseite des Batteriekastens verbunden ist. Damit eine gleichmäßige Strömung und somit eine gleichmäßige Temperierung der einzelnen Zellen stattfindet, die eine gute Funktionalität des Batteriekasten gewährleistet, nimmt der freie Querschnitt des Verteilerkanals in Strömungsrichtung des temperierenden Fluids ab und derjenige des Sammelkanals in Strömungsrichtung zu. Beim Einsatz derartiger Batteriekasten als Traktionsbatterien in Kraftfahrzeugen ist es notwendig, den vorhandenen Bauraum möglichst gut auszunutzen. Bei dem gattungsgemäßen Batteriekasten mit stehenden Zellen ist es aber vielfach nicht möglich, die Kapazität oder die Spannung dadurch zu erhöhen, daß Zellen übereinander , bspw. in einer zweiten Ebene angeordnet werden, da dies wenigstens die doppelte Bauhöhe in Anspruch nimmt, die allerdings vielfach, so z.B. beim Einbau in einen Kofferraum oder bei einem Unterflureinbau, nicht zu Verfügung steht. Außerdem ergeben sich bei einer derartigen Konstruktion Probleme mit der Temperierung, wie auch der meßtechnischen Erfassung der Temperatur und der Spannung der Zellen bzw. Zellengruppen.

Die Aufgabe der Erfindung ist es, den gattungsgemäß zugrundegelegten Batteriekasten dahingehend weiterzuentwickeln, daß bei einem mit Zellen bestückten Batteriekasten die Ausnutzung des zur Verfügung stehenden Bauraumes erleichtert oder verbessert wird, wobei die Funktionalität bzgl. der Temperierung und der Überwachung zumindest beibehalten wird.

Die Aufgabe wird erfindungsgemäß durch einen Batteriekasten mit den kennzeichnenden Merkmalen des Anspruchs 1 gelöst. Durch die liegende Stapelung von lageunabhängigen Zellen wird eine bessere Höhenausnutzung des bspw. für den Einbau des Batteriekastens zur Verfügung stehenden Bauraumes erreicht, da die erforderliche Bauhöhe nur ein Vielfaches der Zellendicke und nicht der Zellenhöhe ist. Durch die Ausbildung der Querströmkanäle für das die Zellen temperierende Fluid, insbesondere von Gasen wie Luft usw., ist die bisherige gute Temperierung weiterhin erhalten. Ein weiterer Vorteil ergibt sich auch hinsichtlich der meßtechnischen Überwachung des Batteriekastens, da die zu Zellengruppen zusammengefaßten Zellen geometrisch ähnlich angebracht sind, wodurch hinsichtlich des Wärmeüberganges und der Strömungstechnik eine gewisse Ähnlichkeit vorliegt. Dadurch genügt es, je nach Größe der Zellengruppen, für jede Zellengruppe u.U. nur ein Meßsignal für die Temperatur und/oder die Spannung als Meßgröße heranzuziehen. Bedingt durch den geschichteten Aufbau der Zellengruppen innerhalb des Batteriekastens, können also die einzelnen Stapel, bspw. durch eine Detektion des durchströmenden Fluids bzgl. Temperatur und/oder Strömungsgeschwindigkeit und/oder Strömungsvolumen und/oder der Spannung des Stapels in einfacher Weise in in kleinen Einheiten überwacht werden, so daß bei einem auftretenden Fehler eine genauere Lokalisation möglich ist. Des weiteren ist die Einbringung der dafür benötigten Detektoren erleichtert, da deren nach außen führenden Leitungen entlang der Wände der Querströmkanäle geführt werden können, wodurch sie nur einen geringen und i.a. einen vernachlässigbaren Strömungswiderstand für das temperierende Fluid bilden. Unter Zellengruppen sind mehrere in der Art über eine Grundfläche in Vertikalrichtung fluchtend oder in Vertikalrichtung gestaffelt angeordnete Zellen zu verstehen, wobei die Grundfläche, die auch der Deckfläche entspricht, aus einer einzigen Zelle, durch mehrere hintereinander oder mehrere nebeneinander oder einer Kombination dieser beiden Möglichkeiten gebildet werden kann.

Zweckmäßige Ausgestaltungen der Erfindung sind den Unteransprüchen entnehmbar. Im übrigen wird die Erfindung anhand eines in den Figuren dargestellten Ausführungsbeispieles im folgenden erläutert. Dabei zeigt
- Fig. 1: einen vertikalen Längsschnitt durch einen Batteriekasten entlang der Linie I-I aus Figur 2,
- Fig. 2: einen horizontalen Schnitt durch den Batteriekasten nach Figur 1 mit entnommenen Leitplatten und strichliert dargestellten gestellten Distanzschienen entlang der Linie II-II und
- Fig. 3 bis 5: eine schematische Darstellung verschiedener Möglichkeiten zur Anordnung der Zellen innerhalb eines erfindungsgemäßen Batteriekastens.

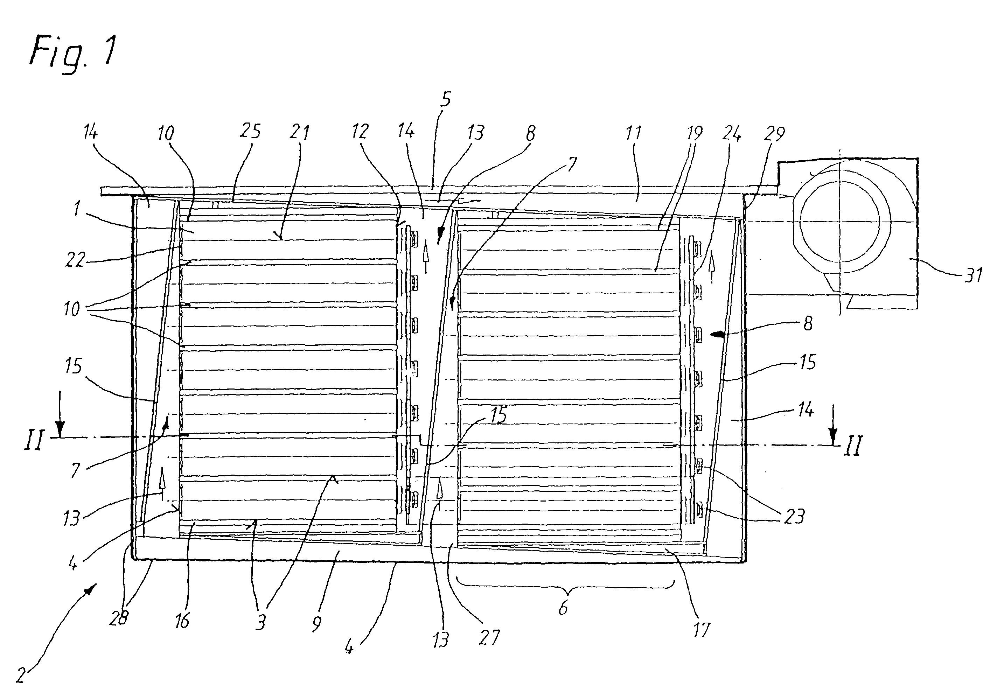

In Figur 1 ist ein vertikal verlaufender Längsschnitt durch einen erfindungsgemäßen Batteriekasten 2 dargestellt, in dessen Innern mehrere als lageunabhängig ausgebildete Zellen 1 elektrochemischer Speicher angeordnet sind. Die quaderförmigen Zellen 1, deren Pole 23 an einer ihrer Stirnseiten 12 austreten, sind in Vertikalrichtung fluchtend übereinander angeordnet, wobei die Fluchtlinie durch die kleinste Kante einer Zelle 1, also der zwischen der Schmalseite 21 der Zelle 1 und dem Boden bzw. dem Deckel der Zelle 1 gebildeten Bodenseitenkante 22, gebildet ist, wodurch die Zellen 1 innerhalb des Batteriekastens 2 liegend, d.h. mit ihrer Flachseite 3 etwa parallel zum Boden 4 bzw. dem Deckel 5 des Batteriekastens 2 angeordnet sind.

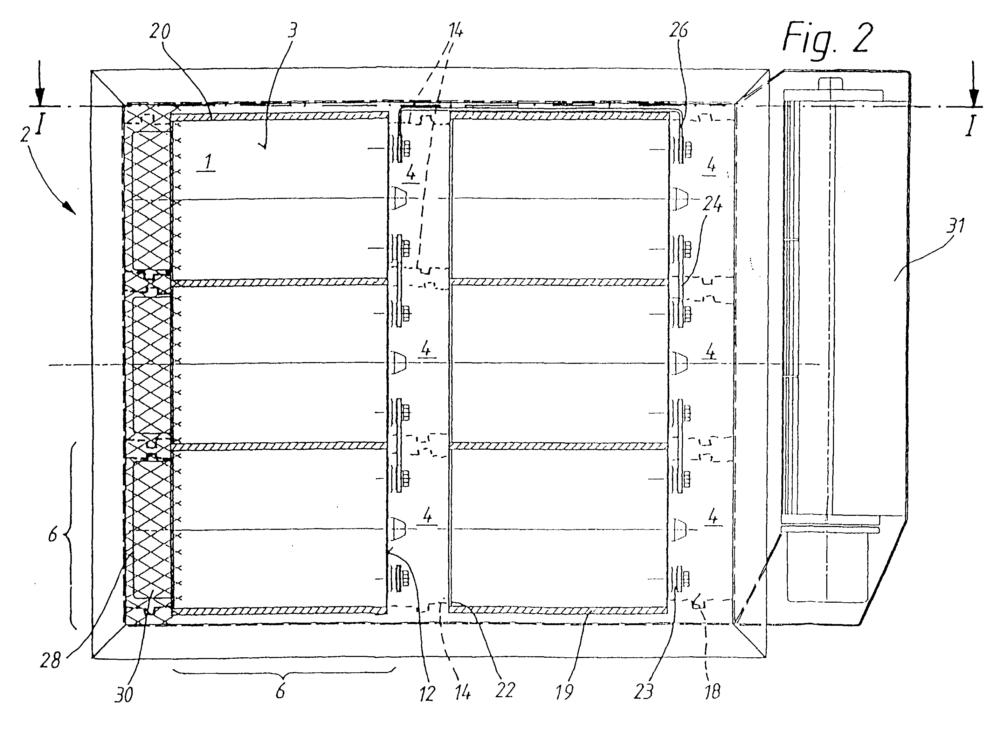

Alle Zellen 1, die derart oberhalb einer Zelle 1 angeordnet sind, sind zu einer Zellengruppe 6 zusammengefaßt. Zwischen den einzelnen Zellen 1 einer Zellengruppe 6 ist jeweils ein Durchströmkanal 10 angeordnet, der durch einen Abstand zwischen den Flachseiten 3 benachbarter Zellen 1 gebildet ist. Der gegenseitige und die Durchströmkanäle 10 ausbildende gleichmäßige Abstand der Flachseiten 3 der Zellen 1 wird günstigerweise durch Auflageleisten 19 realisiert, die geringfügig in den parallelen Durchströmkanal 10 einragen und die an entlang der Schmalseiten 21 der Zellen 1 angeordneten Zellengruppenwände 20 (siehe Figur 2) angeordnet sind.

Um eine einfache Montage zu ermöglichen, sind drei Zellengruppen 6 an ihren Schmalkanten 21 seitlich benachbart zueinander angeordnet und werden in einfacher Weise außerhalb des Batteriekastens 2 in der gewünschten Weise - seriell, parallel oder eine Kombination hieraus - mittels Polverbindern 24 elektrisch miteinander zu einem Zellenmodul verbunden.

Zur Aussteifung des Batteriekastens 2 und für eine eventuelle Isolation der Zellengruppen 6 gegeneinander ist zwischen den seitlich benachbarten Zellengruppen 6 jeweils eine Zellengruppenwand 20 angeordnet, von der beidseitig angeordnete Auflageleisten 19 für die Zellen 1 abragen. Zur externen Vormontage eines Zellenmoduls ist an den äußeren Zellengruppen 6 ebenfalls eine Zellengruppenwand 20 angeordnet, von der allerdings nur nach innen ragend Auflageleisten 19 angeordnet sind. Durch u.a. diese Maßnahme kann ein Zellenmodul außerhalb des Batteriekastens 2 nicht nur mit Polverbindern 24 verschaltet, sondern bereits auch mit zwischen benachbarten Zellen 1 eines Zellenstapels 6 fertig ausgebildeten Durchströmkanälen 10 vormontiert werden.

Im Falle des Batteriekastens 2 - ein horizontal verlaufender Schnitt ist in Figur 2 dargestellt - sind in dem Batteriekasten 2 zwei Zellenmodule polbolzenseitig, bzw. da die Pole 23 der Zellen 1 an einer Stirnseite der Zellen 1 angeordnet sind, stirnseitig hintereinander und mit einem gegenseitigen Abstand zueinander angeordnet.

Die unterste Zelle 1 einer Zellengruppe 6 des Zellenmoduls ist auf einem distanzsichernden Ablagesims 16 einer Abschlußplatte 17 abgelegt, die oberhalb des Bodens 4 des Batteriekastens 2 angeordnet ist. Damit die jeweils unterste Zelle 1 einer Zellengruppe 6 den gleichen Bedingungen unterliegt, ist auch zwischen der Abschlußplatte 17 und diesen untersten Zellen 1 jeweils ein Durchströmkanal 8 ausgebildet.

Aus den gleichen Gründen ist oberhalb der obersten Zelle 1 eines Zellenstapels 6 eine Deckplatte 25 angeordnet, die zur Ausbildung eines Durchströmkanales 10 von der obersten Zelle 1 beabstandet ist. Um eine weitere Stabilisierung des Batteriekastens 2 und eine weitere Lagesicherung der Zellen 1 innerhalb des Batteriekastens 2 zu realisieren, ist die Deckplatte 25 zweckmäßigerweise gegen die oberste Zelle 1 keilförmig abgestützt.

Die auf den Abschlußplatten 17 abgestellten Zellenmodule werden anschließend mittels Modulverbindern 26 elektrisch miteinander verbunden, wobei die Anbringung dieser Modulverbinder 26 einfach vorzunehmen ist, da die Stirnseiten 12 der in den Batteriekasten 2 eingebrachten Zellen 1, an denen die Pole 23 der Zellen 1 austreten, aufgrund des Abstandes zwischen den Zellenmodulen und einem stirnseitigen Abstand der Zellenmodule von den gegenüberliegenden Wänden des Batteriekasten 2, gut zugänglich sind.

Zur gegenseitigen Distanzsicherung der Zellenmodule und zur Distanzsicherung der Zellenmodule von den stirnseitig gegenüberliegenden, die Stirnseite des Batteriekastens 2 bildenden Wänden des Batteriekastens 2, werden nach dem Einbringen der Zellenmodule in den Batteriekasten 2 zwischen die Zellenmodule und entsprechend zwischen die Zellenmodule und die Stirnseiten des Batteriekastens 2 Distanzschienen 14 (in Figur 2 strichliert eingezeichnet) eingesteckt, die jeweils randseitig an der Bodenseitenkante 22 der einzelnen Zellen 1 der Zellengruppen 6 anliegen. Auf diese Weise dienen diese Distanzschienen 14 gleichzeitig noch der Aussteifung des Batteriekastens 2 und der Lagesicherung der einzelnen Zellen 1.

Des weiteren weisen die Distanzschienen 14 Führungsnuten 18 auf, in die Leitplatten 15 einführbar sind. Die Leitplatten 15 bilden mit den Stirnseiten 12 der Zellen 1 eines Zellenstapels 6 Querströmkanäle 7, 8 aus. Die fluidisch mit den Durchströmkanälen 10 eines Zellenstapels 6 verbundenen Querströmkanäle 7, 8 sind in einen Querzuströmkanal 7 und einen bzgl. einer Zelle 1 gegenüberliegenden Querabströmkanal 8 unterteilt, so daß der Batteriekasten 2 pro Zellengruppe 6 jeweils zwei eigene, ausschließlich dieser Zellengruppe 6 zugeordnete Querströmkanäle 7, 8 aufweist.

In einigen Fällen kann es jedoch auch sinnvoll sein, daß ein Batteriekasten für ein aus mehreren Zellengruppen 6 gebildetes Zellenmodul einen einzigen Querzuströmkanal und einen einzigen Querabströmkanal aufweist, die sich über die gesamte Breite des Moduls erstrecken, da hierbei Gewicht eingespart werden kann. Bei einer derartigen Ausbildung eines Batteriekastens ist die, in dem Ausführungsbeispiel nach Figur 1 und 2 als Zellenmodul bezeichnete Anordnung der Zellen 1 als Zellengruppe anzusehen, wobei diese Zellengruppe dann als Grundfläche anstatt einer einzigen Zelle 1 nunmehr drei seitlich aneinander angeordnete Zellen 1 aufweist.

Damit in den Durchströmkanälen 10 eine gleichmäßige und vergleichbare Strömung eines über den Querzuströmkanal 7 einströmenden und über den Querabströmkanal 8 abströmenden temperierenden Fluids herrscht, sind die Führungsnuten 18 gegenüber der Vertikalrichtung geneigt ausgerichtet, so daß die Querzuströmkanäle 7 einen sich in Strömungsrichtung 13 verengenden, frei durchströmbaren Querschnitt und die Querabströmkanäle 8 einen sich in Strömungsrichtung 13 erweiternden, frei durchströmbaren Querschnitt aufweisen.

Um hierbei eine unkontrollierte Strömung zu vermeiden sind die Querzuströmkanäle 7 günstigerweise im Bereich der in Strömungsrichtung 13 letzten Zelle 1 einer Zellengruppe 6 und die Querabströmkanäle 8 im Bereich der in Strömungsrichtung 13 ersten Zelle 1 einer Zellengruppe 6 dichtend verschlossen. Im Ausführungsbeispiel nach Figur 1 und 2 ist daher der Querzuströmkanal 7 gegenüber der Deckplatte 25 und der Querabströmkanal 8 gegenüber der Abschlußplatte 17 dichtend verschlossen. Sinnvollerweise erfolgt diese Abdichtung durch ein dichtendes Anliegen der Leitplatte 15 an der entsprechenden Abschlußplatte 17 bzw. an der Deckplatte 25.

Des weiteren bietet diese Art der Ausbildung der Querströmkanäle 7, 8 den Vorteil, daß die Modulverbinder 26, wie prinzipiell schon oben erwähnt, einfacher anzubringen sind, da die Leitplatten 15 erst nach dem Anbringen der Modulverbinder 26 in die Führungsnuten 18 der Distanzschienen 14 eingeschoben werden.

Zur Temperierung der Zellen 1, die sinnvollerweise mit Luft erfolgt, weist der Batteriekasten 2 in seinem Inneren einen bodenseitig und unterhalb der Abschlußplatte 17 angeordneten Verteilerkanal 9 auf, der bspw. über in der Abschlußplatte 17 angeordnete Öffnungen 27 fluidisch mit dem bzgl. der Zelle 1 bodenseitig angeordneten Querzuströmkanal 7 verbunden ist. Zur Abströmung der in dem polbolzen- also bzgl. den Zellen 1 deckelseitige angeordneten Querabströmkanal 8 anfallenden Luft, weist der Batteriekasten 2 einen im Bereich seines Deckels 5 und oberhalb der Deckplatte 25 angeordneten Sammelkanal 11 auf, der fluidisch mit den Querabströmkanälen 8 der Zellengruppen 6 verbunden ist.

Das Fluid strömt also über den Verteilerkanal 9 in die Querzuströmkanäle 7 der Zellengruppen 6, von denen über die Durchströmkanäle 10 in die Querabströmkanäle 8 der Zellengruppen 6, von wo aus das Fluid in den Sammelkanal 11 gelangt.

Damit eine gleichartige Strömung des Fluids in den Durchströmkanälen 10 und dadurch eine gleichartige Temperierung der Zellen 1 innerhalb des Batteriekastens ermöglicht ist, weist der Verteilerkanal 9 einen sich in Strömungsrichtung 13 verkleinernden, frei durchströmbaren Querschnitt und der Sammelkanal 11 einen sich erweiternden, frei durchströmbaren Querschnitt auf, wobei der Batteriekasten 2 zu Anfang des Verteilerkanals 9 und zu Ende des Sammelkanals 11 mit Einströmöffnungen 28 und einer Ausströmöffnung 29 zum Ein- bzw. Ausströmen des Fluids versehen ist. Damit ein den Strömungswiderstand der verschiedenen Kanäle erhöhender Eintritt von Schmutz ins Innere des Batteriekastens 2 zumindest erschwert ist, ist die Eintrittsöffnung 28 zweckmäßigerweise mit einem Gitter 30 abgedeckt.

Als günstig zu verwendende elektrochemischen Speicher kommen Zellen 1 wie Trockenzellen, Rekombinationszellen, Gelzellen oder dgl., insbesondere gasdichte Zellen 1 mit einem gebundenem Elektrolyteni n Frage.

Bei intensiv zu temperierenden Zellen 1 ist es aufgrund eines guten Wärmeübergangs sinnvoll, Zellen 1 mit einem Metallgehäuse zu verwenden, weshalb es in diesem Fall zweckmäßig ist, die Auflageleisten 19, und/oder die Ablagesimsen 16 und/oder die zwischen den einzelnen Zellengruppen 6 eines Zellenmoduls angeordneten Zellengruppenwände 20 und/oder die Distanzschienen 14 und/oder die Wände des Batteriekastens 2 und/oder die Abschlußplatte 17 und/oder die Deckplatte 25 aus einem isolierenden Material zu fertigen.

Des weiteren ist es bei derartigen intensiv zu temperierenden Zellen 1 günstig, zuströmseitig und/oder, wie im Ausführungsbeispiel nach Figur 1 und 2 dargestellt, abströmseitig einen einblasenden bzw., wie im Ausführungsbeispiel nach Figur 1 und 2 dargestellt, einen saugenden Ventilator 31 vorzusehen. Anstelle eines Ventilators 31 kann auch ein Gebläse, eine Pumpe oder dgl. verwendet werden.

Zur Überwachung der Zellen 1 ist es zweckmäßig, zur Überwachung der Funktion der Zellen 1 verwendete Detektoren zellengruppenspezifisch anzuordnen und die benötigten Leitungen über die Abschlußplatte 17 und/oder die Deckplatte 25 nach außen zu führen, wodurch nur ein geringer Strömungswiderstand auftritt. Bzgl. der Detektoren ist es günstig, diese an den Distanzschienen 14 anzuordnen. Bzgl. der zugehörigen Leitungen ist es vorteilhaft, die keilförmig ausgebildete Abschlußplatte 17 und/oder die keilförmig ausgebildete Deckplatte 25 innenseitig hohl auszubilden und die zu den Detektoren führenden Leitung in diesen Hohlräumen zu führen.

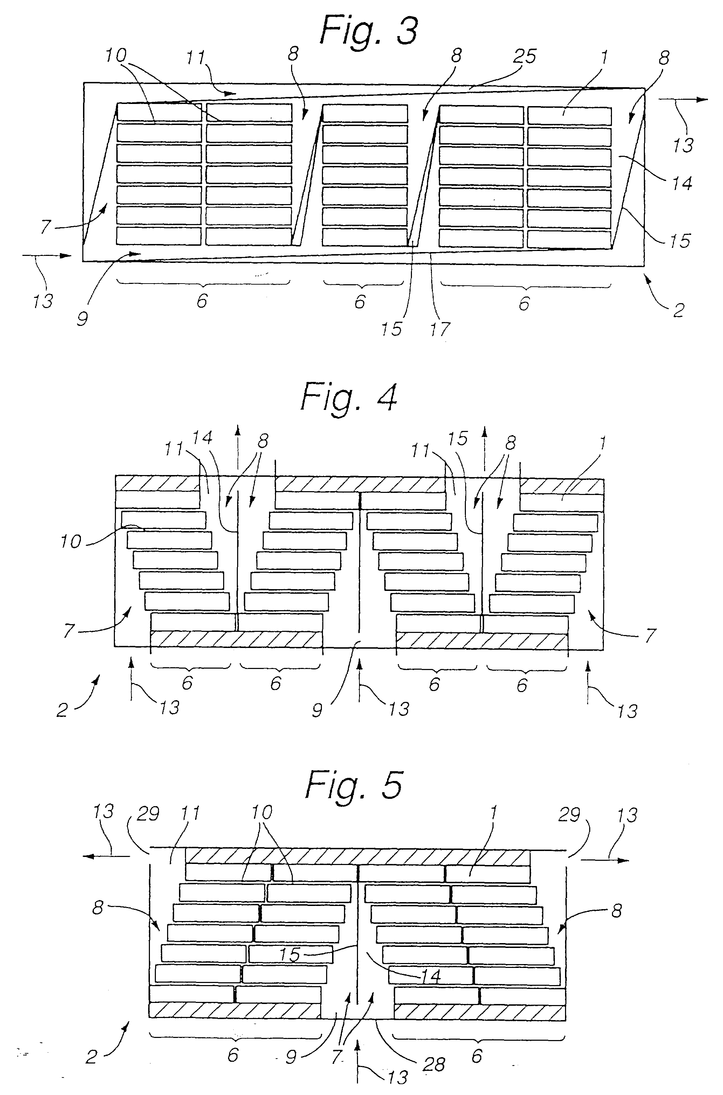

Anhand der Figuren 3 bis 6 werden im folgenden verschiedene Möglichkeiten der Anordnung von Zellen 1 mit unterschiedlich gebildeten Zellengruppen 6 innerhalb eines schematisch dargestellten, erfindungsgemäßen Batteriekastens 2 beschrieben.

In Figur 3 ist ein Batteriekasten 2 in Seitenansicht dargestellt, in dessen Inneren drei Zellengruppen 6 angeordnet sind. Aus Platzgründen weisen die beiden äußeren Zellengruppen 6 hierbei eine aus zwei stirnseitig hintereinander angeordneten Zellen 1 bestehende Grundfläche auf, wobei die Zellen 1 dieser Zellengruppe mit ihrer polfreien Stirnseite unter Ausbildung eines Zwischenraumes aneinanderligen. Die Fluchtlinie der übereinander angeordneten Zellen 1 ist weiterhin parallel zur Bodenseitenkante 22 der Zellen 1. Der Zwischenraum zwischen den hintereinander angeordneten Zellen 1 dieser Grundfläche ist, damit die stabilität der Zellengruppe gewährleistet ist, ausgefüllt, wobei die lichte Öffnungsweite der Durchströmöffnungen 10 allenfalls geringfügig verändert wird, so daß eine Umströmung der Zellen 1 einer derartigen Zellengruppe gewährleistet ist. Bei Zellen 1 mit metallischen Gehäuse kann die Füllung der Zwischenräume gleichzeitig zu Isolationszwecken, bspw. durch Einfügen eines Isoliermaterials ausgenützt werden. Die Einströmöffnung 28 des Verteilerkanals 9 liegt, wie im in den Figuren 1 und 2 dargestellten Ausführungsbeispiel, weiterhin diametral der Ausströmöffnung 29 des Sammelkanals 11 gegenüber.

Bei einem Batteriekasten 2 nach Figur 4 ist die Grundfläche aller vier Zellengruppen 6 durch eine einzige Zelle 1 gebildet. Die Fluchtlinie der übereinander gestapelten Zellen 1 dieser Zellengruppen 6 ist allerdings quer zur Vertikalrichtung geneigt, wodurch im Innern des Batteriekastens 2 die Zellen 1 innerhalb einer Zellengruppe 6, bezogen auf die zur Bodenseitenkante 22 parallele Vertikalrichtung, gestaffelt übereinander angeordnet sind. Dadurch können die Leitplatten 15 in Vertikalrichtung ausgerichtet und eingeschoben werden. Des weiteren weist der Batteriekasten 2 drei Einströmöffnungen 28 auf, von denen zwei randseitig am Batteriekasten 2 angeordnete Einströmöffnungen 28, über einen kleinen Verteilerkanal, der durch die Wandungen der Eintrittsöffnungen 28 im Batteriekasten gebildet ist, einen Querzuströmkanal 7 direkt versorgen. Die dritte Einströmöffnung ist im Boden 4 des Batteriekastens 2 mittig angeordnet, wobei jeweils unterhalb der untersten Zelle 1 der zugehörige Verteilerkanal 9 ausgebildet ist. Die insgesamt zwei Ausströmöffnungen 29 sind im Deckel 5 des Batteriekastens 2 angeordnet, wobei der jeweils zugehörige Sammelkanal durch die Wandungen der Ausströmöffnungen in diesem Batteriekasten 2 gebildet sind.

Die schematische Darstellung des Ausführungsbeispieles nach Figur 5 stellt in gewissem Sinne eine Kombination der Möglichkeiten nach Figur 3 und 4 dar. Die Grundfläche der vorliegenden zwei Zellengruppen 6 wird durch zwei stirnseitig hintereinander angeordnete Zellen 1 gebildet. Die Fluchtrichtung der übereinander gestaffelt angeordneten Zellen 1 einer Zellengruppe 6 ist gegen die Vertikalrichtung geneigt, wobei die Ausrichtung der Leitplatte 15 in Vertikalrichtung ermöglicht ist. Die Einströmöffnung 28 ist mittig im Boden 4 des Batteriekastens 2 angeordnet, während die zwei sich selbst gegenseitig gegenüberliegenden Austrittsöffnungen 29 randseitig im Bereich des Deckels 5 des Batteriekastens 2 angeordnet sind.

Ergänzend sei zu allen Ausführungsbeispielen der Figuren 1 bis 5 erwähnt, daß bei gleicher Bauweise der Batteriekasten 2 und bei gleicher Anordnung der Zellen 1 bzw. der Zellengruppen 6 die Strömungsrichtung 13 des temperierenden Fluids gegenüber der beschrieben Weise umgekehrt werden kann, da die Wirkungen des strömenden Fluids in diesen Fällen, von der Strömungsrichtung 13 unabhängig ist.

## Patentansprüche

1. Batteriekasten mit mehreren als lageunabhängige Zellen ausgebildeten elektrochemischen Speichern,
- welche Zellen (1) in Gebrauchslage des Batteriekastens (2) mit ihrer kleinster Erstreckung vertikal, also horizontal liegend, d.h. bei quaderförmigen Zellen (1) mit ihrer Flachseite (3) etwa parallel zum Boden (4) bzw. zum Deckel (5) des Batteriekastens (2) ausgerichtet sind,
- wobei die Zellen (1) zu innerhalb des Batteriekastens (2) lagedefiniert angeordneten Zellengruppen (6) zusammengefaßt sind, in der die Zellen (1) übereinanderliegend angeordnet sind,
- weiterhin mit jeweils zwischen benachbarten Zellen einer Zellengruppe (6) angeordenetem Durchströmkanal (10), der durch einen Abstand der Zellen (1) zueinander gebildet und von einem Fluid durchströmbar ist,
- weiterhin mit einem einer jeden Zellengruppe (6) stapelbezogen zugeordnetem Querzuström- (7) und einem Querabströmkanal (8) aufweist,
- wobei der Querzuströmkanal (7) fluidisch mit den Durchströmkanälen (10) der zugeordneten Zellengruppe (6) und der Querabströmkanal (8) fluidisch mit den Durchströmkanälen (10) der zugeordneten Zellengruppe (6) verbunden ist,
- weiterhin mit einem im Bereich einer - zuströmseitigen - Seite des Batteriekastens (2) angeordneten Verteilerkanal (9), der mit den Querzuströmkanälen (10) fluidisch verbunden ist und
- weiterhin mit einem im wesentlichen im Bereich einer der zuströmseitigen Seite des Batteriekasten (2) gegenüberliegenden, - abströmseitigen - Seite des Batteriekastens angeordneten (2) Sammelkanal (11), der mit den Querabströmkanälen (10) fluidisch verbunden ist,
- weiterhin mit mehreren längsseitig, insbesondere polbolzenseitig hintereinander angeordneten Zellengruppen (6), welche durch Distanzschienen (14) zueinander distanzsichernd beabstandet sind,
- wobei die Distanzschienen (14) randseitig an stirn- bzw. polbolzenseitigen Kanten der Zellen (1) dieser Zellengruppen (6) anliegen,
- wobei die Distanzschienen (14) eine Führungsnut (18) aufweisen, in die die Querströmung des Fluids leitende Leitplatten (15) eingebracht sind und
- wobei die Flachseiten der Leitplatten (15) mit den jeweils gegenüberliegenden Stirnseiten (12) der jeweiligen Zellen (1) dieser Zellengruppen (6) den Querabströmkanal (8) der ersten Zellengruppe (6) und den Querzuströmkanal (7) der zweiten Zellengruppe (6) ausbilden.

2. Batteriekasten nach Anspruch 1,
**dadurch gekennzeichnet,**
daß der Batteriekasten (2) Zellen (1) wie Trockenzellen, Rekombinationszellen, Gelzellen oder dgl., insbesondere gasdichte Zellen (1) mit einem gebundenem Elektrolyten aufweist.

3. Batteriekasten nach Anspruch 1,
**dadurch gekennzeichnet,**
daß der Querzuströmkanal (7) und der Querabströmkanal (8) an entgegengesetzten Seiten, insbesondere an den den Boden und den Deckel einer Zelle (1) bildenden Stirnseiten (12) der Zellen (1) einer Zellengruppe (6) angeordnet sind.

4. Batteriekasten nach Anspruch 1,
**dadurch gekennzeichnet,**
daß die Querzuströmkanäle (7) einen sich in Strömungsrichtung (13) verengenden Querschnitt und die Querabströmkanäle (8) einen sich in Strömungsrichtung (13) erweiternden freien Querschnitt aufweisen.

5. Batteriekasten nach Anspruch 1,
**dadurch gekennzeichnet,**
daß die Zellen (1) einer Zellengruppe (6) ungefähr in gerader Linie fluchtend übereinander angeordnet sind.

6. Batteriekasten nach Anspruch 1,
**dadurch gekennzeichnet,**
daß die Zellen (1) einer Zellengruppe (6) ungefähr in gerader Linie fluchtend übereinander angeordnet sind und daß die Fluchtlinie parallel zur kürzesten Kante der Zellen (1) liegt.

7. Batteriekasten nach Anspruch 1,
**dadurch gekennzeichnet,**
daß der Batteriekasten (2) mehrere längsseitig, insbesondere polbolzenseitig hintereinander angeordnete Zellengruppen (6) aufweist, welche durch Distanzschienen (14) zueinander distanzsichernd beabstandet sind, wobei die Distanzschienen (14) randseitig an den Zellen (1) der Zellengruppen (6) anliegen.

8. Batteriekasten nach Anspruch 1,
**dadurch gekennzeichnet,**
daß die unterste Zelle (1) einer Zellengruppe (6) auf einem distanzsichernden Ablagesims (16) einer Abschlußplatte (17) abgelegt ist, welche Abschlußplatte (17) oberhalb des Bodens (4) des Batteriekastens (2) abgelegt ist,
daß zwischen der Abschlußplatte (17) und der untersten Zelle (1) einer Zellengruppe (6) ein Durchströmkanal (8) ausgebildet ist,
daß unterhalb der Abschlußplatte (17) der eine Kanal und oberhalb der obersten Zelle (1) einer Zellengruppe (6) und unterhalb des Deckels (5) des Batteriekastens (2) der andere Kanal von Sammel- (11) und Verteilerkanal (9) angeordnet ist.

9. Batteriekasten nach Anspruch 1,
**dadurch gekennzeichnet,**
daß die frei durchströmbare lichte Weite des Verteilerkanals (9) in Strömungsrichtung (13) abnimmt und daß die frei durchströmbare lichte Weite des Sammelkanals (10) in Strömungsrichtung (13) zunimmt.

## Claims

1. Battery box having a plurality of electrochemical stores which are constructed as orientation-independent cells,
- which cells (1) are aligned, when the battery box (2) is in the in-use orientation, with their smallest extent vertical, that is to say lying horizontally, ie. in the case of parallelepiped cells (1) with their flat side (3) approximately parallel to the base (4) and to the cover (5) of the battery box (2),
- the cells (1) being combined to form cell groups (6) arranged in a defined orientation within the battery box (2), in which group the cells (1) are arranged one above the other,
- furthermore having a flow channel (10) in each case arranged between adjacent cells of a cell group (6), which flow channel is formed by a mutual separation between the cells (1) and through which a fluid can flow,
- furthermore having a transverse inlet flow channel (7) and a transverse outlet flow channel (8) associated, in a stack-related manner, with each cell group (6),
- the transverse inlet flow channel (7) being connected in fluid terms to the flow channels (10) of the associated cell group (6), and the transverse outlet flow channel (8) being connected in fluid terms to the flow channels (10) of the associated cell group (6),
- furthermore having a distributor channel (9) which is arranged in the region of one side - on the inlet flow side of the battery box (2) and is connected in fluid terms to the transverse inlet flow channels (10), and
- furthermore having a collecting channel (11) which is arranged essentially in the region of a side of the battery box (2) opposite the inlet flow side - on the outlet flow side of the battery box (2) and is connected in fluid terms to the transverse outlet flow channels (10),
- furthermore having a plurality of cell groups (6) which are arranged longitudinally, especially on the pole bolt side, one behind the other and are spaced apart, such that their mutual separation is ensured, by spacer bars (14),
- the spacer bars (14) resting at the edge against edges of the cells (1) of these cell groups (6), said edges being on the end or pole bolt sides,
- the spacer bars (14) having a guide groove (18) into which guide plates (15) which guide the transverse flow of the fluid are introduced, and
- the flat sides of the guide plates (15), together with the respectively opposite ends (12) of the respective cells (1) of these cell groups (6), forming the transverse outlet flow channel (8) of the first cell group (6) and the transverse inlet flow channel (7) of the second cell group (6).

2. Battery box according to Claim 1, characterized in that the battery box (2) has cells (1) such as dry cells, recombination cells, gel cells or the like, especially gas-tight cells (1) with a bound electrolyte.

3. Battery box according to Claim 1, characterized in that the transverse inlet flow channel (7) and the transverse outlet flow channel (8) are arranged on opposite sides, especially on those ends (12) of the cells (1) of a cell group (6) which form the base and the cover of a cell (1).

4. Battery box according to Claim 1, characterized in that the transverse inlet flow channels (7) have a cross-section which tapers in the flow direction (13), and the transverse outlet flow channels (8) have a free cross-section which widens in the flow direction (13).

5. Battery box according to Claim 1, characterized in that the cells (1) of a cell group (6) are arranged approximately in a straight line, aligned, one above the other.

6. Battery box according to Claim 1, characterized in that the cells (1) of a cell group (6) are arranged approximately in a straight line, aligned, one above the other, and in that the alignment line is parallel to the shortest edge of the cells (1).

7. Battery box according to Claim 1, characterized in that the battery box (2) has a plurality of cell groups (6) which are arranged longitudinally, especially on the pole bolt side, one behind the other and are spaced apart, such that their mutual separation is ensured, by spacer bars (14), the spacer bars (14) resting at the edge against the cells (1) of the cell groups (6).

8. Battery box according to Claim 1, characterized in that the bottom cell (1) of a cell group (6) is placed on a supporting ledge (16), which ensures the separation, of a sealing plate (17), which sealing plate (17) is placed above the base (4) of the battery box (2), in that a flow channel (8) is formed between the sealing plate (17) and the bottom cell (1) of a cell group (6), in that one channel of the collecting channel (11) and distributor channel (9) is arranged underneath the sealing plate (17), and the other channel is arranged above the top cell (1) of a cell group (6) and below the cover (5) of the battery box (2).

9. Battery box according to Claim 1, characterized in that the unobstructed width, through which flow can pass freely, of the distributor channel (9) reduces in the flow direction (13) and in that the unobstructed width, through which flow can pass freely, of the collecting channel (10) increases in the flow direction (13).

## Revendications

1. Caisse de batterie comportant plusieurs accumulateurs électrochimiques conçus comme éléments indépendants de la position,
- les éléments (1), en position d'utilisation de la caisse de batterie (2), étant orientés verticalement par leur plus petite extension, étant donc situés horizontalement, c'est à dire que pour des éléments (1) parallèlépipédiques, ils sont à peu près parallèles au fond (4) ou au couvercle (5) de la caisse de batterie (2),
- les éléments (1) étant regroupés en groupes d'éléments (6) disposés selon une position définie à l'intérieur de la caisse de batterie (2) et dans lesquels les éléments (1) sont disposés les uns au-dessus des autres,
- comportant en outre un canal de passage (10) respectivement disposé entre les éléments adjacents d'un groupe d'éléments (6), formé par un espacement des éléments (1) entre eux et traversable par un fluide,
- comportant en outre un canal transversal d'arrivée (7) et un canal transversal d'écoulement (8) associés à chaque groupe d'éléments (6) en référence à la pile,
- le canal transversal d'arrivée (7) étant relié fluidiquement aux canaux de passage (10) du groupe d'éléments associé (6) et le canal transversal d'écoulement (8) étant relié fluidiquement aux canaux de passage (10) du groupe d'éléments associé (6),
- comportant en outre un canal de distribution (9) disposé dans la zone d'un côté - côté de l'arrivée - de la caisse de batterie (2) et qui est relié fluidiquement aux canaux transversaux d'arrivée (10) et
- comportant en outre un canal collecteur (11) disposé en substance dans la zone d'un côté - côté de l'écoulement - de la caisse de batterie (2) opposé au côté de l'arrivée de la caisse de batterie (2) et qui est relié par un fluide aux canaux transversaux d'écoulement (10),
- plusieurs groupes d'éléments (6) disposés les uns derrière les autres du côté longitudinal, notamment du côté des bornes et qui sont espacés les uns des autres par des rails de distanciation (14) pour assurer une distance réciproque,
- les rails de distanciation (14) étant juxtaposés, sur le bord, aux arêtes frontales et du côté des bornes, des éléments (1) de ces groupes d'éléments (6),
- les rails de distance (14) présentant une rainure de guidage (18) dans laquelle les plaques de guidage (15) guidant l'écoulement transversal du fluide sont placées et
- les côtés plats des plaques de guidage (15) formant avec les côtés frontaux (12) respectivement opposés des éléments respectifs (1) de ces groupes d'éléments (6), le canal transversal d'écoulement (8) du premier groupe d'éléments (6) et le canal transversal d'arrivée (7) du second groupe d'éléments (6).

2. Caisse de batterie selon la revendication 1, caractérisée en ce que la caisse de batterie (2) présente des éléments (1) tels que des éléments secs, des éléments de recombinaison, des éléments avec du gel ou similaires, notamment des éléments (1) étanches au gaz avec un électrolyte associé.

3. Caisse de batterie selon la revendication 1, caractérisée en ce que le canal transversal d'arrivée (7) et le canal transversal d'écoulement (8) sont disposés sur des côtés opposés, notamment sur les côtés frontaux (12) formant le fond et le couvercle d'un élément (1) et situés sur les éléments (1) d'un groupe d'éléments (6).

4. Caisse de batterie selon la revendication 1, caractérisée en ce que les canaux transversaux d'arrivée (7) présentent une section transversale se rétrécissant dans le sens d'écoulement (13) et les canaux transversaux d'écoulement (8) présentent une section transversale libre s'élargissant dans le sens d'écoulement (13).

5. Caisse de batterie selon la revendication 1, caractérisée en ce que les éléments (1) d'un groupe d'éléments (6) sont disposés à peu près en ligne droite, alignés les uns au-dessus des autres.

6. Caisse de batterie selon la revendication 1, caractérisée en ce que les éléments (1) d'un groupe d'éléments (6) sont disposés à peu près en ligne droite, alignés les uns au-dessus des autres et en ce que l'alignement est parallèle à l'arête la plus courte des éléments (1).

7. Caisse de batterie selon la revendication 1, caractérisée en ce que la caisse de batterie (2) présente plusieurs groupes d'éléments (6) disposés les tins derrière les autres, du côté longitudinal, notamment du côté des bornes et espacés les uns des autres par des rails de distanciation (14) pour assurer une distance réciproque, les rails de distanciation (14) étant juxtaposés, sur le bord, aux éléments (1) des groupes d'éléments (6).

8. Caisse de batterie selon la revendication 1, caractérisée en ce que l'élément (1) inférieur d'un groupe d'éléments (6) est posé sur une nervure de support (16) assurant une distanciation et faisant partie d'une plaque de fermeture (17) qui est placée au-dessus du fond (4) de la caisse de batterie (2), en ce que, entre la plaque de fermeture (17) et l'élément inférieur (1) d'un groupe d'éléments (6), un canal de passage (8) est réalisé, en ce que, au-dessous de la plaque de fermeture (17), l'un des canaux est, du canal collecteur (11) et du canal de distribution (9), disposé et au-dessus de l'élément supérieur (1) d'un groupe d'éléments (6) et au-dessous du couvercle (5) de la caisse de batterie (2), l'autre canal, du canal collecteur (11) et du canal de distribution (9), est disposé.

9. Caisse de batterie selon la revendication 1, caractérisée en ce que le diamètre intérieur librement traversable du canal de distribution (9) décroît dans le sens d'écoulement (13) et en ce que le diamètre intérieur librement traversable du canal collecteur (11) augmente dans le sens d'écoulement (13).
